# EUROPÄISCHE PATENTSCHRIFT

(11) **EP 2 027 793 B1**
(45) Veröffentlichungstag und Bekanntmachung des Hinweises auf die Patenterteilung: **20.02.2013**
(21) Anmeldenummer: 07016506.3
(22) Anmeldetag: 22.08.2007
(51) Int. Cl.: A47B 3/08, F16B 12/52, F16B 12/42

(54) **Klappbare Verbindung zwischen zwei Bauteilen**
Foldable connection between two components
Liaison pivotante entre deux composants

(43) Veröffentlichungstag der Anmeldung: 25.02.2009
(60) Teilanmeldung: 11183588.0
(73) Patentinhaber: Waibel, Walter, 84130 Dingolfing (DE)
(72) Erfinder: Waibel, Walter, 84130 Dingolfing (DE)
(74) Vertreter: Winter, Brandl, Fürniss, Hübner, Röss, Kaiser, Polte - Partnerschaft

(56) Entgegenhaltungen:
- DE-U1-202006 017 166
- GB-A- 189 515 184
- US-A1- 2003 067 132

## Beschreibung

Die Erfindung betrifft eine klappbare Verbindung zwischen zwei Bauteilen, insbesondere Möbelbauteilen, wie zum Beispiel einer Tischplatte und einem Tischgestell, mit einem, insbesondere werkzeuglos, arretierbaren Schwenkgelenk gemäß dem Oberbegriff des Anspruchs 1.

Solche klappbaren Verbindungen werden insbesondere verwendet, um sperrige Gegenstände besser zwischenlagern oder transportieren zu können, da sie im zusammengeklappten Zustand einen geringeren Platzbedarf haben.

Aus US 2003 / 0067132 A1 ist ein klappbarer Tretroller mit einem arretierbaren Schwenkgelenk bekannt.

Klapptische sind im Arbeits-, Heim- und im Freizeitbereich seit vielen Jahren bekannt. Die Verwendung von Klapptischen macht vor allem dann Sinn, wenn diese bedarfsweise auf- und anschließend wieder abgebaut werden sollen. Hierbei werden jedoch sehr unterschiedliche Anforderungen an den Klappmechanismus gestellt.

Während im Freizeitbereich leichte und kostengünstige Lösungen Anwendungen finden, werden im Arbeitsbereich, zum Beispiel bei Büromöbeln, aufgrund von Arbeitsschutzrichtlinien erheblich höhere Anforderungen hinsichtlich Stabilität und Schwingungsfähigkeit gesetzt. Bekannte Klapptische genügen entweder nicht diesen Richtlinien oder sehen einen sehr aufwendigen Klapp- und Arretiermechanismus vor.

Neben Stabilität und Schwingungsfähigkeit kommt der Handhabung solcher klappbaren Verbindungen eine zunehmend wichtige Bedeutung zu. Deshalb sollen moderne klappbare Büromöbel innerhalb kurzer Zeit und ohne großen montagetechnischen Aufwand auf- bzw. abgebaut werden können. So wäre es zum Beispiel wünschenswert, diese ohne spezielles Werkzeug auf- bzw. abbauen zu können, wie es aus dem Freizeitbereich, zum Beispiel bei Biertisch- oder Campinggarnituren, bekannt ist.

Jedoch sind die insbesondere bei diesen Freizeitklappmöbeln zur Stabilisierung vorgesehenen Querstreben bei Büromöbeln unerwünscht, da sie die Beinfreiheit und den Platz zur Unterbringung von Rollcontainern allzu sehr einschränken.

Der vorliegenden Erfindung liegt deshalb die Aufgabe zugrunde, eine klappbare Verbindung, insbesondere für zusammenklappbare Möbel, wie zum Beispiel Tische, zu schaffen, welche auf einfache Weise fertigbar und handhabbar ist, aber auch den modernen Arbeitsschutz- und Zertifizierungsrichtlinien hinsichtlich Stabilität und Schwingungsfähigkeit gerecht werden.

Diese Aufgabe wird durch die Merkmale des Anspruchs 1 gelöst.

Bei der erfindungsgemäßen Klappverbindung lassen sich die zueinander verschwenkbaren Bauteile, z.B. Tischplatte und -gestell, zumindest in einer Schwenkposition zur drehfesten Fixierung der Relativlage der Bauteile festklemmen.

Der Vorteil dieser Anordnung liegt darin, dass durch die erfindungsgemäße Klemmung die Relativbewegung der beiden zueinander verschwenkbaren Teile form- und kraftschlüssig fixiert wird und keinerlei Spielraum für eine Drehbewegung des Schwenkgelenks ermöglicht wird, so dass sich hieraus eine sehr stabile, aber auch schwingungsfähige Verbindung zwischen den Bauteilen ergibt.

Vorteilhafte Weiterbildungen der erfindungsgemäßen Verbindung sind Gegenstand der Unteransprüche.

Vorzugsweise ist das Schwenkgelenk mittels zumindest einer Klemmvorrichtung arretierbar. Dadurch wird erreicht, dass aufgrund der vorgesehenen Klemmvorrichtung kein weiteres Material oder Werkzeug notwendig ist, um die Bauteile in einer beliebigen Position von Hand zu fixieren bzw. z.B. zum Zusammenklappen wieder zu lösen. Hier zu eignen sich aus dem Stand der Technik bekannte Klemmeinrichtungen, insbesondere sog. Schnellspannvorrichtungen.

Wenn eine Klemmeinrichtung in einer Drehachse des Schwenkgelenks angeordnet ist, können mit dieser die Bauteile in jeder beliebigen Relativstellung drehfest fixiert werden. Neben einer stufenlosen Einstellung des Schwenkgelenks ermöglicht diese Anordnung, dass die beiden Bauteile nicht nur im ausgeklappten Zustand, sondern auch im zusammengeklappten Zustand fixiert werden können. Letzteres verhindert, dass sich zum Beispiel beim Transport oder beim Lagern die Bauteile ungewollt aufklappen und so gegebenenfalls jemanden verletzen bzw. etwas beschädigen.

Anstelle oder zusätzlich zu der oben genannten Klemmeinrichtung kann eine Klemmeinrichtung vorgesehen werden, welche von der Drehachse des Schwenkgelenks beabstandet ist und mit welcher sich das eine Bauteil gegen einen Anschlag des anderen Bauteils spannen lässt. Dadurch lässt sich die Klemmeinrichtung wesentlich einfacher gestalten, da der Anschlag, gegen den die Klemmeinrichtung spannt, bereits durch die Bauteile selbst vorgegeben wird und nicht extra in der Klemmeinrichtung vorgesehen werden muss. Die Klemmeinrichtung muss lediglich in eine Richtung wirken.

Das Schwenkgelenk kann aus einem Träger an einem ersten Bauteil und einer Lagerplatte an einem zweiten Bauteil bestehen, welche mittels eines Drehbolzens miteinander schwenkbar verbunden sind. Diese Anordnung stellt eine sehr einfach herstellbare klappbare Verbindung zwischen zwei Bauteilen dar. Zur weiteren Erhöhung der Festigkeit ist es vorteilhaft, statt einer Lagerplatte ein Lagerplattenpaar vorzusehen, welches den Träger dazwischen einschließt, so dass das mit dem Lagerplattenpaar verbundene Bauteil sich lediglich um die durch den Drehbolzen definierte Schwenkachse drehen kann und der Freiheitsgrad in andere Richtungen minimiert ist.

Vorzugsweise kann die Klemmvorrichtung mit dem Träger verbunden sein und aus einer drehbaren Lasche und einer Schnellspannvorrichtung bestehen, wobei die Lasche und die Schnellspannvorrichtung dergestalt sind, dass sie in der Schwenkstellung die Schwenkbewegung der Lagerplatte bzw. des Lagerplattenpaars relativ zum Träger nicht behindern, und zumindest die Lasche in der festklemmbaren Schwenkposition der beiden Bauteile in eine Stellung drehbar ist, in der die Lasche die Lagerplatte bzw. das Lagerplattenpaar abschnittsweise überdeckt und mit Hilfe der Schnellspannvorrichtung gegen die Tischplatte gespannt werden. Durch die Verwendung einer allgemein bekannten, als Schnellspanner oder Schnellspannervorrichtung bezeichneten Klemmvorrichtung lässt sich die Verriegelung des Schwenkgelenks sehr schnell und ohne zusätzlichem Werkzeug von Hand lösen bzw. spannen. Zur Verriegelung der Bauteile im ausgeklappten Zustand bedarf es lediglich eines einfachen Handgriffs, mit dem die Lasche gedreht und die Schnellspannvorrichtung gespannt wird. Durch die erfindungsgemäße Gestaltung wird ferner eine platzsparende Unterbringung der Klemmvorrichtung in der Schwenkstellung erreicht, so dass diese den Schwenkvorgang nicht beeinträchtigt.

Um die Schwenkbewegung des Schwenkgelenks nicht zu behindern, lassen sich die Lasche und die Schnellspannvorrichtung in der Schwenkstellung gegen den Träger drehfest festklemmen. Dadurch wird verhindert, dass sich die drehbare Lasche nicht unabsichtlich verdreht und bei den Schwenkbewegungen seitlich an den Lagerplatten reibt und sich unter Umständen mit diesen verklemmt.

Erfindungsgemäß sind Träger und Lagerplatte so verbunden, dass Träger und Lagerplatte im vollständig ausgeklappten Zustand auf der der Tischplatte zugewandten Seite miteinander bündig abschließen. Ebenso sollten Träger und Lagerplatte auf der der Tischplatte abgewandten Seite miteinander bündig abschließen. Es ist aber vorteilhaft, dass auf der der Tischplatte abgewandten Seite die Lagerplatte über den Träger hervorsteht und so als Druckpunkt für die mit dem Träger verbundene Klemmvorrichtung dient. Durch die leichte Erhöhung der Lagerplatte können Träger und Lagerplatte besser miteinander kraft- und formschlüssig gespannt werden.

Die Erhöhung der Lagerplatte auf der der Tischplatte abgewandten Seite kann auf einfache Weise erreicht werden, indem die Schwenkachse, d.h. die Bohrung für den Drehbolzen, entweder im Träger oder in der Lagerplatte so außermittig angeordnet wird, dass beide im vollständig ausgeklappten Zustand auf der der Tischplatte zugewandten Seite miteinander bündig abschließen, und auf der der Tischplatte abgewandten Seite die Lagerplatte über den Träger hervorsteht, um als Druckpunkt für die Klemmvorrichtung zu dienen. Mittels dieses sehr einfachen konstruktiven Tricks wird die Voraussetzung für eine feste und stabile Klemmung des Schwenkgelenks in der Verriegelungsstellung erreicht.

Anstatt die Schwenkachse im Träger oder in der Lagerplatte außermittig anzubringen, um eine Erhöhung der Lagerplatte über den Träger und so einen Druckpunkt für die Klemmvorrichtung zu erreichen, kann der gleiche Effekt dadurch erreicht werden, dass an den Stellen, an denen die Klemmvorrichtung die Lagerplatte bzw. das Lagerplattenpaar überdeckt, kleine Schrauben oder Schweißpunkte vorgesehen werden, die über den Träger hervorstehen und als Druckpunkte für die Klemmvorrichtung dienen. Diese Vorgehensweise kann insbesondere dann Sinn machen, wenn ein bereits vorhandenes Schwenkgelenk mit der erfindungsgemäßen Klemmvorrichtung nachträglich ausgestattet werden soll.

Gemäß einer erfindungsgemäßen Weiterbildung liegen beide Bauteile in der Verriegelungsstellung des Schwenkgelenks über zumindest eine Kontaktflächenanordnung flächig aneinander. Indem die Bauteile flächig aneinander liegen, ist eine rotatorische Bewegung der Bauteile zueinander über die Verriegelungsstellung hinaus nicht möglich. So begrenzen die Bauteile selbst bzw. das Schwenkgelenk den möglichen Schwenkbereich. Der Vorteil dieser Kontaktflächenanordnung liegt aber nicht nur in der Begrenzung des Schwenkbereichs, sondern auch in einer insgesamt höheren Stabilität des Tisches im ausgeklappten Zustand, da die beiden Bauteile in der Verriegelungsstellung gewissermaßen einen Formschluß bilden und sich über die Kontaktflächen gegenseitig stabilisieren.

Erfindungsgemäß kann am zweiten Bauteil ein Anschlag vorgesehen sein, an welchem der Träger des ersten Bauteils im vollständig ausgeklappten Zustand anliegt und so die Relativbewegung von Träger und Lagerplatte begrenzt. Dadurch muß die Klemmvorrichtung letztendlich die Drehbewegung nur in eine Richtung verhindern, wodurch sich insgesamt die Klemmvorrichtung sehr einfach gestalten und realisieren lässt.

Zur Erhöhung der Stabilität und der Festigkeit der Klappverbindung kann die Lagerplatte bzw. das Lagerplattenpaar an einem der Bauteile stoffschlüssig angebracht sein, z.B. angeschweißt sein.

Vorzugsweise ist die Schwenkachse des Schwenkgelenks zur drehfesten Fixierung der Bauteile von einer Schwenkstellung in eine Verriegelungsstellung verschiebbar, in der die Bauteile eine Relativlage einnehmen, welche den Freiheitsgrad der Schwenkachse blockiert. Der Vorteil dieser Anordnung liegt darin, dass zur drehfesten Fixierung bzw. zum Lösen der Fixierung und zum Schwenken der Bauteile lediglich die Schwenkachse des Schwenkgelenks verschoben werden muss. Dies ist deshalb möglich, weil die Bauteile in der Verriegelungsstellung so zueinander stehen, dass sich der Klappmechanismus selbst hemmt und die Bauteile sich nicht mehr relativ zueinander verschwenken lassen. Diese Relativstellung der Bauteile kann vorteilhafterweise zur Stabilisierung der Bauteile im ausgeklappten Zustand herangezogen werden.

Eine weitere Kontaktflächenanordnung kann dadurch erreicht werden, dass die Stirnseite des Trägers in dem ausgeklappten Zustand an dem zweiten Bauteil, zum Beispiel an einer Traverse des Tischgestells, flächig anliegt, wodurch die Stabilität des ausgeklappten Möbelstücks weiter erhöht wird.

Nachstehend werden anhand von schematischen Zeichnungen Ausführungsbeispiele der Erfindungen näher erläutert. Es zeigen:
Figur 1 eine perspektivische Ansicht einer erfindungsgemäßen klappbaren Verbindung in der Ausgestaltung eines zusammenklappbaren Tisches in einer Schwenkstellung gemäß einer ersten Ausführungsform;
Figur 2 eine perspektivische Ansicht der erfindungsgemäßen klappbaren Verbindung in der Ausgestaltung eines zusammenklappbaren Tisches in der Verriegelungsstellung gemäß der ersten Ausführungsform;
Figur 3 eine Querschnittsansicht der erfindungsgemäßen Verbindung gemäß der ersten Ausführungsform; und
Figur 4 eine vergrößerte perspektivische Ansicht der erfindungsgemäßen klappbaren Verbindung in der Ausgestaltung eines zusammenklappbaren Tisches in der Verriegelungsstellung gemäß einer zweiten Ausführungsform, bei der aus Darstellungsgründen die Klemmvorrichtungen weggelassen sind;

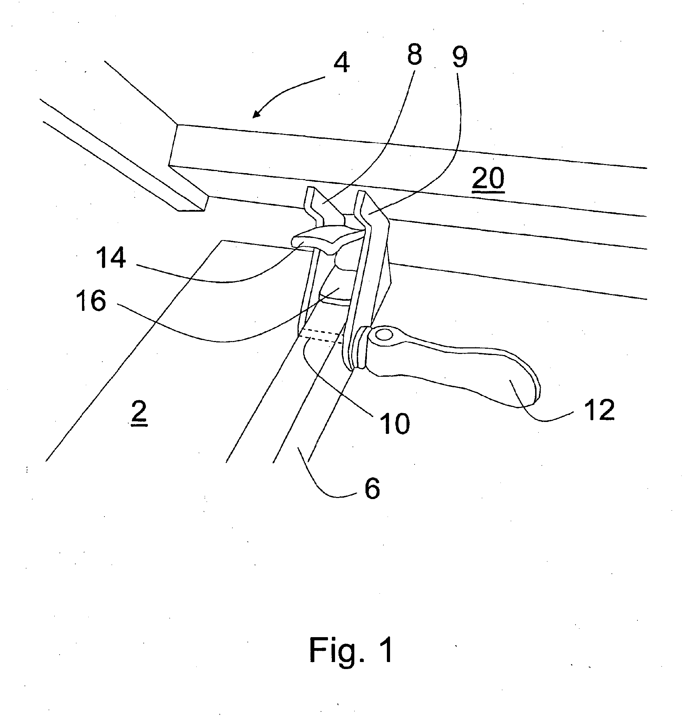

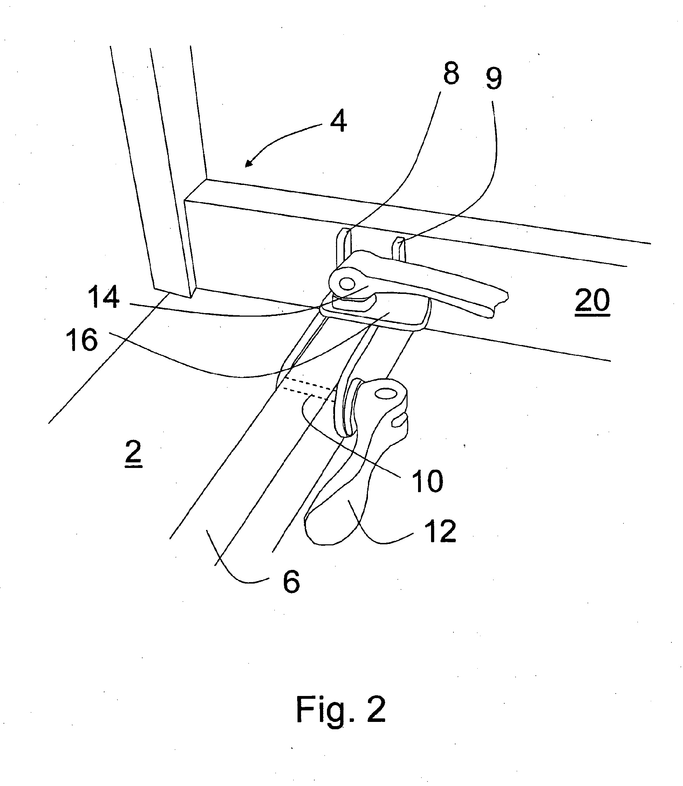

Figur 1 zeigt eine Tischplatte 2, welche mit einem Tischgestell 4 klappbar verbunden ist. An der Unterseite der Tischplatte 2 (in der Zeichnung oben) ist ein Träger 6 angeordnet, welcher von einem Lagerplattenpaar 8, 9 gelenkig aufgenommen ist, welches seinerseits an das Tischgestell 4 geschweißt ist. Das Lagerplattenpaar 8, 9 und der Träger 6 sind über einen Drehbolzen 10 miteinander verbunden. Der Drehbolzen ist seinerseits mit einem Schnellspanner 12 verbunden, der in einer geöffneten Stellung (siehe Figur 1) eine Relativbewegung des Trägers 6 und des Lagerplattenpaars 8 zulässt, und in einer geschlossenen Stellung (siehe Figur 2) Träger 6 und Lagerplattenpaar 8, 9 so miteinander verspannt, dass über den Reibschluß eine Relativbewegung beider Teile zueinander unterbunden wird. An dem Träger 6 ist auf der tischabgewandten Seite ein Schnellspanner 14 vorgesehen, mittels welchem eine im Wesentlichne rechteckförmige Lasche 16 gegen den Träger 6 vorgespannt werden kann. Die Breite der Lasche 16 und des Schnellspanners 14 ist so gewählt, dass sie in etwa der Breite des Trägers entspricht, so dass sie in der in Figur 1 gezeigten Schwenkstellung zwischen dem Lagerplattenpaar 8, 9 Platz finden und untergebracht sind, so dass sie die Schwenkbewegung des Lagerplattenpaars 8, 9 um den Drehbolzen 10 nicht beeinträchtigen. Damit die Lasche 16 sich während des Schwenkvorgangs nicht unabsichtlich verdreht, kann diese während des Schwenkens mit dem Schnellspanner 14 gegen den Träger 6 vorgespannt und somit fixiert werden.

Wenn das Tischgestell 4 mit dem Lagerplattenpaar 8, 9 vollständig ausgeklappt ist (siehe Figur 2), kann der Schnellspanner 14 gelöst werden und zusammen mit der Lasche 16 um ca. 90 Grad gedreht werden, so dass die Lasche 16 das Lagerplattenpaar 8, 9 auf der dem Tisch abgewandten Seite abschnittsweise überdeckt. Anschließend kann der Schnellspanner 14 wieder geschlossen werden, so dass die Querlasche gegen den Träger 6 vorgespannt wird. Da die Lasche 16 in der Verriegelungsstellung das Lagerplattenpaar 8, 9 überdeckt, spannt diese das Lagerplattenpaar 8, 9 ebenfalls in Richtung Träger. Da im ausgeklappten Zustand das Lagerplattenpaar 8, 9 auf der der Tischplatte zugewandten Seite flächig an der Unterseite der Tischplatte 2 anliegt, wird das Lagerplattenpaar 8, 9 über die Lasche 16 und den am Träger 6 befestigten Schnellspanner 14 gegen die Tischplatte 2 so verspannt, dass eine drehfeste Fixierung von Tischplatte 2 und Tischgestell 4 eintritt. Der Hub des Schnellspanners 14 sollte so gewählt sein, dass sich die Lasche 16 in der Verriegelungstellung gegen das Lagerplattenpaar 8, 9 und in der Schwenkstellung (siehe oben) gegen den Träger 6 spannen lässt. Ferner sollten Lasche 16, der Schnellspanner 14 und ein dazwischen befindliches Klemmkissen so miteinander gekoppelt sein, dass sich die Lasche 16 bei einer Drehbewegung des Schnellspanners 14 von der Schwenkstellung (Figur 1) in die Verriegelungsstellung (Figur 2) und umgekehrt ebenfalls mitdreht.

Da der Träger 6 an beiden Seiten von dem Lagerplattenpaar 8, 9 aufgenommen ist, ist dieser quasi zwischen zwei Wangen formschlüssig eingepaßt, so dass keine seitlichen Bewegungen des Tischgestells bezüglich der Tischplatte möglich sind. Zur zusätzlichen Fixierung kann der mit dem Drehbolzen 10 verbundene Schnellspanner 12 ebenfalls geschlossen und somit die Fixierung der Verriegelungsstellung weiter erhöht werden.

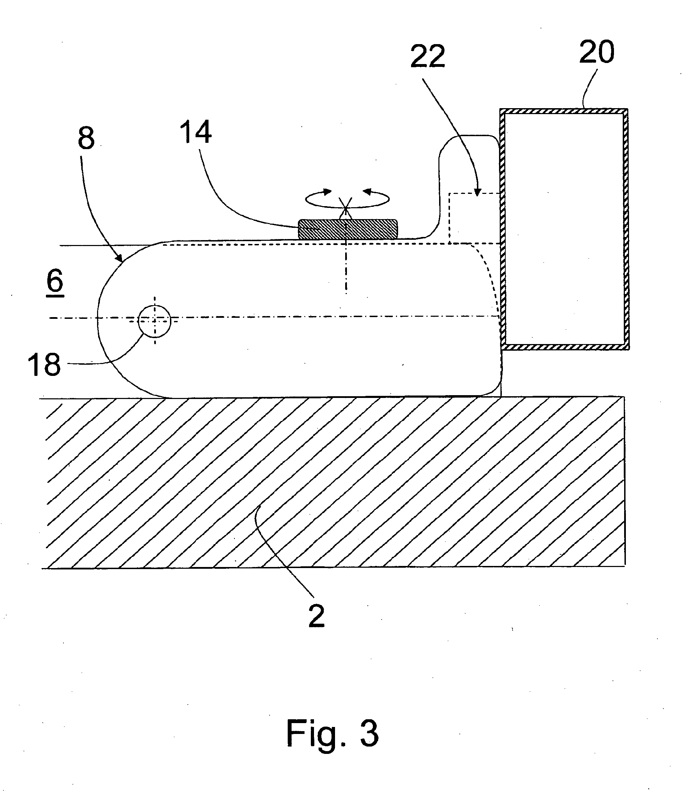

Figur 3 zeigt eine Querschnittsansicht des erfindungsgemäßen Schwenkgelenks, aus welcher ersichtlich wird, dass das Lagerplattenpaar 8, 9 im vollständig ausgeklappten Zustand zum einen flächig an der Tischplatte 2 aufliegt, und zum anderen auf der der Tischplatte abgewandten Seite minimal über den Träger 6 hervorsteht, so dass die Lasche 16 in der Verriegelungsstellung (quer zur Ausrichtung des Trägers 6) auf dem Lagerplattenpaar aufliegt und sich so gegen die Tischplatte 2 vorspannen lässt. Die Erhöhung sollte so gewählt werden, dass sich die Lasche 16 in der geöffneten Stellung des Schnellspanners 14 über das Lagerplattenpaar 8, 9 drehen lässt. Zur Erreichung dieser Erhöhung des Lagerplattenpaars 8 gegenüber dem Träger 6 kann man sich eines einfachen konstruktiven Tricks behelfen, indem die Höhe des Lagerplattenpaars 8 etwas größer gewählt wird als die des Trägers 6 und das Durchgangsloch 18 für den Drehbolzen 10 um die Höhendifferenz außermittig im Lagerplattenpaar vorgesehen wird. Gleiches wird erreicht, wenn anstatt im Lagerplattenpaar 8, 9 das Durchgangsloch im Träger 6 außermittig (aber in der anderen Richtung) vorgesehen wird. Dadurch wird erreicht, dass das Lagerplattenpaar 8, 9 und der Träger 6 im vollständig ausgeklappten Zustand bündig auf der der Tischplatte zugewandten Seite abschließt.

Wie aus Figur 3 ferner ersichtlich ist, liegen der Träger 6 und die Traverse 20 im ausgeklappten Zustand aneinander flächig an, wodurch weiter die Stabilität des Tisches erhöht wird. Ferner kann zur Begrenzung der Drehbewegung beider Bauteile an einer Traverse 20 des Tischgestells 4 zudem ein Anschlag 22 vorgesehen sein, mit dem der Träger 6 im vollständig ausgeklappten Zustand in Anlage kommt.

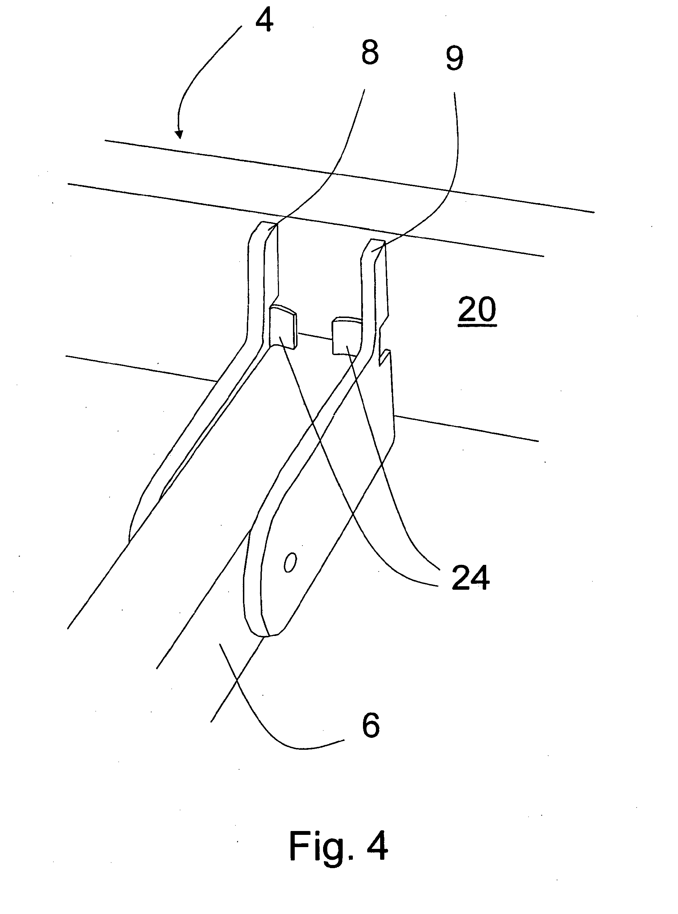

Figur 4 zeigt eine zweite Ausführungsform, bei der anstelle des Anschlags 22 an der Traverse 20, die Lagerplatten 8, 9 Anschläge in Form von nach innen gebogene Zungen 24 aufweisen, an welchen der Träger 6 in der vollständig ausgeklappten Stellung anliegt. Diese Zungen 24 lassen sich auf sehr einfache Weise und sehr genau herstellen und formen, indem die Lagerplatten 8, 9 eingeschnitten werden und die entstandenen Zungen jeweils nach innen, d.h. in Richtung der anderen Lagerplatte, gebogen werden.

Beim Aufstellen des Tisches geht man also wie folgt vor:
Zunächst muß der Schnellspanner 12 geöffnet werden, falls dieser geschlossen worden ist, um ein unbeabsichtigtes Auseinanderklappen des Tischgestells 4 zu verhindern. In der geöffneten Stellung des Schnellspanners 12 lässt sich nun das Tischgestell 4 aufklappen und in die gewünschte vollständige aufgeklappte Endstellung bringen. Figur 1 zeigt hierbei eine Zwischenstellung des Schwenkvorgangs.

Ist die vollständig aufgeklappte Stellung erreicht (Figur 2), kann der Schnellspanner 14, welcher die Lasche 16 während des Schwenkens an den Träger 6 so vorspannt, dass die Lasche 6 die Schwenkbewegung nicht beeinträchtigt, geöffnet werden, so dass sich die Lasche 16 um etwa 90 Grad drehen lässt und das Lagerplattenpaar 8, 9 auf beiden Seiten des Trägers 6 überdeckt. In dieser Stellung kann nun der Schnellspanner 14 wieder geschlossen werden, so dass das Lagerplattenpaar 8, 9 an die Tischplatte 2 vorgespannt wird. Zur zusätzlichen Absicherung der Verriegelungsstellung kann nun der Schnellspanner 12 wieder geschlossen werden, um das Lagerplattenpaar 8, 9 mit dem Träger 6 kraftschlüssig zu verspannen. Da über die beiden Schnellspanner 12 und 14 die Relativbewegung von Tischplatte 2 und Tischgestell 4 blockiert wird und der mit der Tischplatte 2 verbundene Träger 6 über mehrere Kontaktflächenanordnungen (Seitenflächen des Trägers 6 mit den Seitenflächen des Lagerplattenpaars 8, Stirnfläche des Trägers 6 mit der Traverse 20, obere Seitenfläche des Trägers 6 mit dem Anschlag 22 bzw. obere Seitenfläche des Trägers 6 mit den Zungen 24) mit dem Tischgestell 4 in Verbindung steht, wird insgesamt ein sehr stabiles und höchsten Anforderungen gerecht werdendes zusammenklappbares Büromöbel geschaffen.

Das Zusammenklappen des Tisches erfolgt in der umgekehrten Reihenfolge der oben dargestellten Schritte.

Neben den in den Zeichnungen dargestellten Ausführungsformen sind weitere Varianten denkbar, ohne dabei den Grundgedanken der vorliegenden Erfindung zu verlassen.

So kann zum Beispiel ein geeignetes und bereits vorhandenes Schwenkgelenk mit der erfindungsgemäßen Klemmvorrichtung nachgerüstet werden. Die für die Klemmung notwendigen Druckpunkte am Lagerplattenpaar 8, 9 können zum Beispiel dadurch geschaffen werden, dass kleine Schrauben an den Stellen angebracht werden, an welchen die Lasche 16 das Lagerplattenpaar 8, 9 in der Verriegelungsstellung überdeckt. Es können aber auch Schweißpunkte anstelle der Schrauben vorgesehen werden.

Freilich ist auch eine kinematische Umkehr der Verbindungsanordnung denkbar, das heißt, dass das Lagerplattenpaar 8, 9 an der Tischplatte 2 und der Träger 6 an dem Tischgestell 4 angeordnet sein können.

Ferner liegt es im Ermessen eines Fachmannes, wie die Träger 6 und die Lagerplatten 8,9 an den jeweiligen Bauteilen befestigt werden, oder ob diese jeweils in den zu verschwenkenden Bauteilen integriert werden. Je nach Anwendung kann eine Lagerplatte 8 ausreichend sein.

Die Lasche 16 kann nicht nur mit einem Schnellspanner 14, sondern durch jede andere geeignete Einrichtung festgeklemmt werden. Zum Beispiel kann die Lasche 16 mit einer Flügelschraube, einer Imbusschraube oder anderen Schraubverbindungen in der Verriegelungsstellung an den Träger 6 geschraubt werden, um das Lagerplattenpaar 8, 9 gegen die Tischplatte 2 zu spannen. Solche Schraubverbindungen stellen eine kostengünstige Alternative zu dem in der Beschreibung dargestellten Schnellspanner 14 dar.

Wenn anstelle des runden Durchgangsloch 18 in den Lagerplatten 8, 9 eine Kulisse vorgesehen wird, in der der durch den Träger 6 geführte Drehbolzen 10 aufgenommen ist, lässt sich der Drehbolzen 10, d.h. die Drehachse des Schwenkgelenks, im ausgeklappten Zustand in der Kulisse von einer Stellung, in der die Stirnseite des Trägers 6 die Traverse 20 nicht berührt, in eine Stellung verschieben, in der sich beide berühren. Wenn sich der Träger 6 in der letzteren Stellung befindet, lässt sich das Tischgestell 4 nicht um den durch den Träger 6 geführten Drehbolzen 10 drehen, weil sich Träger 6 und Tischgestell 4 über ihre Flächen gegenseitig blockieren. Dadurch wird ein selbsthemmendes Schwenkgelenk erreicht, welches die Stabilität der Verbindung insgesamt noch weiter erhöht.

Auch wenn die erfindungsgemäße klappbare Verbindung am Beispiel eines zusammenklappbaren Tisches dargestellt worden ist, ist freilich die Anwendung der erfindungsgemäßen Verbindung nicht auf Tische begrenzt, sondern bei jedem beliebigen zusammenklappbaren Gegenstand denkbar.

## Patentansprüche

1. Klappbare Verbindung zwischen zwei Bauteilen (2, 4), insbesondere einer Tischplatte (2) und einem Tischgestell (4), mit einem, vorzugsweise werkzeuglos, arretierbaren Schwenkgelenk (6, 8, 10), wobei
das Schwenkgelenk (6, 8, 10) aus einem Träger (6), der an dem ersten Bauteil (2) angeordnet ist, und aus einer Lagerplatte (8) besteht, die an dem zweiten Bauteil (4) angeordnet ist,
die Schwenkachse von Träger (6) und Lagerplatte (8) durch einen Drehbolzen (10) definiert wird, der die beiden Bauteile (2, 4) miteinander schwenkbar verbindet,
die zueinander verschwenkbaren Bauteile (2, 4) zumindest in einer Schwenkposition zur drehfesten Fixierung der Relativlage der Bauteile (2, 4) mittels zumindest einer Klemmeinrichtung (12, 14), vorzugsweise einer Schnellspannvorrichtung, festklemmbar sind,
**dadurch gekennzeichnet, dass**
am Träger (6) eine von der Schwenkachse des Schwenkgelenks (6, 8, 10) beabstandete Klemmeinrichtung (14) angeordnet ist, mit der die Lagerplatte (8) in der festklemmbaren Schwenkposition gegen einen Anschlag des ersten Bauteils (2) gespannt werden kann.

2. Verbindung nach Anspruch 1, **dadurch gekennzeichnet, dass**
eine Klemmeinrichtung (12) in einer Drehachse des Schwenkgelenks (6, 8, 10) angeordnet ist, mittels welcher die Bauteile (2, 4) in jeder beliebigen Relativstellung drehfest fixierbar sind.

3. Verbindung nach Anspruch 1 oder 2, **dadurch gekennzeichnet, dass**
das Schwenkgelenk (6, 8, 10) eine weitere Lagerplatte (8) aufweist, die
auf der der ersten Lagerplatte (8) gegenübernliegenden Seite des Trägers (6) angeordnet, so dass sich ein den Träger (6) einschließendes Lagerplattenpaar (8) ergibt.

4. Verbindung nach einem der Ansprüche 1 bis 3, **dadurch gekennzeichnet, dass**
die Klemmvorrichtung (14, 16) aus einer drehbaren Lasche (16) und einer Schnellspannvorrichtung (14) besteht, wobei die Lasche (16) und die Schnellspannvorrichtung (14) dergestalt sind, dass sie in der Schwenkstellung die Schwenkbewegung der Lagerplatte bzw. des Lagerplattenpaars (8) relativ zum Träger (6) nicht behindern, und zumindest die Lasche (16) in der festklemmbaren Schwenkposition der beiden Bauteile (2, 4) in eine Stellung drehbar ist, in der die Lasche (16) die Lagerplatte bzw. das Lagerplattenpaar (8) abschnittsweise überdeckt und mit Hilfe der Schnellspannvorrichtung (14) gegen die Tischplatte (2) gespannt werden kann.

5. Verbindung nach Anspruch 4, **dadurch gekennzeichnet, dass**
die Lasche (16) und die Schnellspannvorrichtung (14) in der Schwenkstellung gegen den Träger drehfest festklemmbar sind, so dass diese die Schwenkbewegung des Schwenkgelenks (6, 8, 10) nicht behindern.

6. Verbindung nach einem der Ansprüche 1 bis 5, **dadurch gekennzeichnet, dass**
der Träger (6) und die Lagerplatte (8) so miteinander verschwenkbar verbunden sind, dass sie im vollständig ausgeklappten Zustand auf der der Tischplatte (2) zugewandten Seite miteinander bündig abschließen und die Lagerplatte (8) auf der der Tischplatte (2) abgewandten Seite über den Träger (6) hervorsteht und als Druckpunkt für die Klemmeinrichtung (14, 16) dient.

7. Verbindung nach einem der Ansprüche 1 bis 6, **dadurch gekennzeichnet, dass**
der Träger (6) und die Lagerplatte (8) Durchgangslöcher (18) für den Drehbolzen (10) aufweisen, wobei das Durchgangsloch (18) im Träger (6) oder in der Lagerplatte (8) außermittig angeordnet ist, so dass Träger (6) und Lagerplatte (8) im vollständig ausgeklappten Zustand auf der der Tischplatte (2) zugewandten Seite miteinander bündig abschließen und die Lagerplatte (8) auf der der Tischplatte (2) abgewandten Seite über den Träger (6) hervorsteht, um als Druckpunkt für die Klemmvorrichtung (14, 16) zu dienen.

8. Verbindung nach einem der Ansprüche 1 bis 6, **dadurch gekennzeichnet, dass**
Träger (6) und Lagerplatte (8) mittig angeordnete Durchgangslöcher (18) für den Drehbolzen (10) aufweisen, so dass Träger (6) und Lagerplatte (8) im vollständig ausgeklappten Zustand auf der der Tischplatte (2) zugewandten Seite und auf der der Tischplatte (2) abgewandten Seite miteinander bündig abschließen, wobei an der Lagerplatte (8) auf der der Tischplatte (2) abgewandten Seite Schrauben, Schweißpunkte oder andere Erhöhungen vorgesehen sind, die über den Träger (6) hervorstehen und als Druckpunkte für die Klemmvorrichtung (14, 16) dienen.

9. Verbindung nach einem der Ansprüche 1 bis 8, **dadurch gekennzeichnet, dass**
die beiden Bauteile (2, 4) in einer festklemmbaren Schwenkposition des Schwenkgelenks (6, 8, 10) über zumindest eine Kontaktflächenanordnung flächig aneinander liegen und so die Schwenkbewegung der beiden Bauteile (2, 4) in eine Richtung begrenzen.

10. Verbindung nach einem der Ansprüche 1 bis 8, **dadurch gekennzeichnet, dass**
die Lagerplatte (8) oder das Lagerplattenpaar (8, 9) im vollständig ausgeklappten Zustand flächig am ersten Bauteil (2) anliegt bzw. anliegen, um die Schwenkbewegung des zweiten Bauteils (4) in eine Richtung zu begrenzen.

11. Verbindung nach einem der Ansprüche 1 bis 10, **dadurch gekennzeichnet, dass**
sich an dem zweiten Bauteil (4) ein Anschlag (22, 24) befindet, an welchem der Träger (6) im vollständig ausgeklappten Zustand anliegt, um die Schwenkbewegung des ersten Bauteils (2) in eine Richtung zu begrenzen.

12. Verbindung nach einem der Ansprüche 1 bis 11, **dadurch gekennzeichnet, dass**
die Lagerplatte (8) bzw. das Lagerplattenpaar (8, 9) an einem der Bauteile (4) stoffschlüssig angebracht ist.

13. Verbindung nach einem der Ansprüche 1 bis 12, **dadurch gekennzeichnet, dass**
die Schwenkachse des Schwenkgelenks (6, 8, 10) zur drehfesten Fixierung der Bauteile (2, 4) von einer Schwenkstellung in eine Verriegelungsstellung verschiebbar ist, in der die Bauteile (2, 4) eine Relativlage einnehmen, welche den Freiheitsgrad der Schwenkachse blockiert.

14. Verbindung nach einem der Ansprüche 1 bis 12, **dadurch gekennzeichnet, dass**
der Träger (6) eine Kulisse aufweist, welches darin den durch die Lagerplatte (8) geführten Drehbolzen (10) aufnimmt, und der Drehbolzen (10) in der Kulisse derart verschiebbar ist, dass in der Verriegelungsstellung eine Stirnseite des Trägers (6) gegen eine Fläche des zweiten Bauteils (4) verschiebbar ist und mit dieser zur drehfesten Verbindung einen Formschluss bildet.

## Claims

1. Folding connection between two components (2, 4), in particular a table top (2) and a table frame (4), having a pivotal articulation (6, 8, 10) which can be locked, preferably without the use of a tool, wherein
the pivotal articulation (6, 8, 10) comprises a support (6), which is arranged on the first component (2), and a bearing plate (8), which is arranged on the second component (4),
the pivot axis of the support (6) and the bearing plate (8) is defined by a pivot pin (10) which connects the two components (2, 4) together in a pivotable manner,
the mutually pivotable components (2, 4) can be clamped at least in one pivoted position by means of at least one clamping device (12, 14), preferably a quick-action clamping device, so as to fix the relative position of the components (2, 4) in a rotationally secure manner,
**characterised in that**
there is arranged on the support (6) a clamping device (14) which is at a distance from the pivot axis of the pivotal articulation (6, 8, 10) and with which the bearing plate (8) can be clamped in the clampable pivoted position against a stop of the first component (2).

2. Connection according to claim 1, **characterised in that**
a clamping device (12) is arranged in an axis of rotation of the pivotal articulation (6, 8, 10), by means of which clamping device (12) the components (2, 4) can be fixed in any desired relative position in a rotationally secure manner.

3. Connection according to claim 1 or 2, **characterised in that**
the pivotal articulation (6, 8, 10) has a further bearing plate (8) which is arranged on the side of the support (6) opposite the first bearing plate (8) so that a bearing plate pair (8) enclosing the support (6) is obtained.

4. Connection according to any one of claims 1 to 3, **characterised in that**
the clamping device (14, 16) comprises a rotatable lug (16) and a quick-action clamping device (14), wherein the lug (16) and the quick-action clamping device (14) are so configured that in the pivoted position they do not impede the pivoting movement of the bearing plate or bearing plate pair (8) relative to the support (6), and at least the lug (16) is rotatable, in the clampable pivoted position of the two components (2, 4), into a position in which the lug (16) partially covers the bearing plate or bearing plate pair (8) and can be clamped against the table top (2) with the aid of the quick-action clamping device (14).

5. Connection according to claim 4, **characterised in that**
in the pivoted position the lug (16) and the quick-action clamping device (14) can be clamped against the support in a rotationally secure manner so that they do not impede the pivoting movement of the pivotal articulation (6, 8, 10).

6. Connection according to any one of claims 1 to 5, **characterised in that**
the support (6) and the bearing plate (8) are so connected to one another in a pivotable manner that, in the fully unfolded state, they are flush with one another on the side facing the table top (2) and the bearing plate (8) protrudes beyond the support (6) on the side remote from the table top (2) and serves as a pressure point for the clamping device (14, 16).

7. Connection according to any one of claims 1 to 6, **characterised in that**
the support (6) and the bearing plate (8) have through-holes (18) for the pivot pin (10), the through-hole (18) in the support (6) or in the bearing plate (8) being arranged eccentrically so that, in the fully unfolded state, the support (6) and the bearing plate (8) are flush with one another on the side facing the table top (2) and the bearing plate (8) protrudes beyond the support (6) on the side remote from the table top (2) in order to serve as a pressure point for the clamping device (14, 16).

8. Connection according to any one of claims 1 to 6, **characterised in that**
the support (6) and the bearing plate (8) have centrally arranged through-holes (18) for the pivot pin (10) so that, in the fully unfolded state, the support (6) and the bearing plate (8) are flush with one another on the side facing the table top (2) and on the side remote from the table top (2), there being provided on the bearing plate (8) on the side remote from the table top (2) screws, weld points or other elevations which protrude beyond the support (6) and serve as pressure points for the clamping device (14, 16).

9. Connection according to any one of claims 1 to 8, **characterised in that**
in a clampable pivoted position of the pivotal articulation (6, 8, 10), the two components (2, 4) lie flat against one another by way of at least one contact surface arrangement and thus limit the pivoting movement of the two components (2, 4) in one direction.

10. Connection according to any one of claims 1 to 8, **characterised in that**
in the fully unfolded state the bearing plate (8) or the bearing plate pair (8, 9) lies flat against the first component (2) in order to limit the pivoting movement of the second component (4) in one direction.

11. Connection according to any one of claims 1 to 10, **characterised in that**
on the second component (4) there is a stop (22, 24) against which the support (6) lies in the fully unfolded state in order to limit the pivoting movement of the first component (2) in one direction.

12. Connection according to any one of claims 1 to 11, **characterised in that**
the bearing plate (8) or the bearing plate pair (8, 9) is attached by a material-bonded connection to one of the components (4).

13. Connection according to any one of claims 1 to 12, **characterised in that**
for the rotationally secure fixing of the components (2, 4), the pivot axis of the pivotal articulation (6, 8, 10) can be displaced from a pivoted position into a locking position in which the components (2, 4) assume a relative position which blocks the degree of freedom of the pivot axis.

14. Connection according to any one of claims 1 to 12, **characterised in that**
the support (6) has a slide which receives therein the pivot pin (10) guided by the bearing plate (8), and the pivot pin (10) is so displaceable in the slide that, in the locking position, an end face of the support (6) can be displaced against a surface of the second component (4) and forms an interlocking connection therewith for rotationally secure connection.

## Revendications

1. Système d'assemblage repliable entre deux éléments (2, 4), en particulier entre un plateau de table (2) et une structure de support de table (4), comportant une articulation pivotante (6, 8, 10) pouvant être bloquée, de préférence sans outil, sachant que
l'articulation pivotante (6, 8, 10) est constituée d'un support (6), qui est disposé au niveau du premier élément (2), et d'une plaque d'appui (8), qui est disposée au niveau du deuxième élément (4),
l'axe de pivotement du support (6) et de la plaque d'appui (8) est défini par un pivot (10), qui relie les deux éléments (2, 4) l'un à l'autre de manière à pouvoir pivoter,
les éléments (2, 4) pouvant pivoter l'un par rapport à l'autre peuvent être bloqués au moins dans une position de pivotement afin de fixer de manière solidaire en rotation la position relative des éléments (2, 4) au moyen au moins d'un dispositif de blocage (12, 14), de préférence au moyen d'un dispositif de serrage rapide,
**caractérisé en ce**
**qu'**un dispositif de blocage (14) se trouvant à distance de l'axe de pivotement de l'articulation pivotante (6, 8, 10) est disposé sur le support (6), lequel dispositif de blocage permet de serrer la plaque d'appui (8) dans la position de pivotement pouvant être bloquée contre une butée du premier élément (2).

2. Elément d'assemblage selon la revendication 1, **caractérisé en ce**
**qu'**un dispositif de blocage (12) est disposé dans un axe de rotation de l'articulation pivotante (6, 8, 10), au moyen duquel dispositif de blocage les éléments (2, 4) peuvent être fixés de manière solidaire en rotation dans chaque position relative quelconque.

3. Elément d'assemblage selon la revendication 1 ou 2, **caractérisé en ce**
**que** l'articulation pivotante (6, 8, 10) présente une autre plaque d'appui (8), qui est disposée sur le côté, faisant face à la première plaque d'appui (8), du support (6) de sorte qu'une paire de plaques d'appui (8) renfermant le support (6) se forme.

4. Elément d'assemblage selon l'une quelconque des revendications 1 à 3, **caractérisé en ce**
**que** le dispositif de blocage (14, 16) est constitué d'une bride (16) pouvant tourner et d'un dispositif de serrage rapide (14), sachant que la bride (16) et le dispositif de serrage rapide (14) sont configurés de telle manière qu'ils n'empêchent pas dans la position de pivotement, le mouvement de pivotement de la plaque d'appui ou de la paire de plaques d'appui (8) par rapport au support (6), et sachant que lorsque les deux éléments (2, 4) se trouvent dans la position de pivotement pouvant être bloquée, au moins la bride (16) peut être tournée dans une position, dans laquelle la bride (16) recouvre par endroits la plaque d'appui ou la paire de plaques d'appui (8) et peut être serrée à l'aide du dispositif de serrage rapide (14) contre le plateau de table (2).

5. Elément d'assemblage selon la revendication 4, **caractérisé en ce**
**que** la bride (16) et le dispositif de serrage rapide (14) peuvent être bloqués de manière solidaire en rotation dans la position de pivotement contre le support de sorte que ces derniers n'empêchent pas le mouvement de pivotement de l'articulation pivotante (6, 8, 10).

6. Elément d'assemblage selon l'une quelconque des revendications 1 à 5, **caractérisé en ce**
**que** le support (6) et la plaque d'appui (8) sont reliés entre eux de manière à pouvoir pivoter de telle manière que leurs extrémités respectives, à l'état complètement rabattu sur le côté tourné vers le plateau de table (2), sont alignées entre elles, et en ce que la plaque d'appui (8) fait saillie du support (6) sur le côté opposé au plateau de table (2) et fait office de point de pression pour le dispositif de blocage (14, 16).

7. Système d'assemblage selon l'une quelconque des revendications 1 à 6, **caractérisé en ce**
**que** le support (6) et la plaque d'appui (8) présentent des trous de passage (18) pour le pivot (10), sachant que le trou de passage (18) est disposé dans le support (6) ou dans la plaque d'appui (8) de manière excentrée, de sorte que les extrémités du support (6) et de la plaque d'appui (8), à l'état complètement rabattu sur le côté tourné vers le plateau de table (2), sont alignées entre elles, et en ce que la plaque d'appui (8) fait saillie du support (6) sur le côté opposé au plateau de table (2) pour faire office de point de pression pour le dispositif de blocage (14, 16).

8. Système d'assemblage selon l'une quelconque des revendications 1 à 6, **caractérisé en ce**
**que** le support (6) et la plaque d'appui (8) présentent des trous de passage (18) disposés au centre pour le pivot (10) de sorte que les extrémités du support (6) et de la plaque d'appui (8), à l'état complètement rabattu sur le côté tourné vers le plateau de table (2) et sur le côté opposé au plateau de table (2), sont alignées entre elles, sachant que sont prévus au niveau de la plaque d'appui (8), sur le côté opposé au plateau de table (2), des vis, des points de soudure et d'autres bosses, lesquels font saillie du support (6) et font office de points de pression pour le dispositif de blocage (14, 16).

9. Système d'assemblage selon l'une quelconque des revendications 1 à 8, **caractérisé en ce**
**que** les deux éléments (2, 4), lorsque l'articulation pivotante (6, 8, 10) se trouve dans une position de pivotement pouvant être bloquée, se trouvent au-dessus au moins d'un ensemble de surfaces de contact à plat l'un contre l'autre, ce qui limite ainsi le mouvement de pivotement des deux éléments (2, 4) dans une direction.

10. Système d'assemblage selon l'une quelconque des revendications 1 à 8, **caractérisé en ce**
**que** la plaque d'appui (8) ou la paire de plaques d'appui (8, 9), à l'état complètement rabattu, repose ou reposent à plat sur le premier élément (2) afin de limiter le mouvement de pivotement du deuxième élément (4) dans une direction.

11. Système d'assemblage selon l'une quelconque des revendications 1 à 10, **caractérisé en ce**
**que** se trouve au niveau du deuxième élément (4) une butée (22, 24), contre laquelle le support (6) repose à l'état complètement rabattu, afin de limiter le mouvement de pivotement du premier élément (2) dans une direction.

12. Système d'assemblage selon l'une quelconque des revendications 1 à 11, **caractérisé en ce**
**que** la plaque d'appui (8) ou la paire de plaques d'appui (8, 9) sont montées par liaison de matière au niveau de l'un (4) des éléments.

13. Système d'assemblage selon l'une quelconque des revendications 1 à 12, **caractérisé en ce**
**que** l'axe de pivotement de l'articulation pivotante (6, 8, 10) peut être déplacé par coulissement depuis une position de pivotement dans une position de verrouillage aux fins de la fixation de manière solidaire en rotation des éléments (2, 4), dans laquelle position de verrouillage les éléments (2, 4) prennent une position relative qui bloque le degré de liberté de l'axe de pivotement.

14. Système d'assemblage selon l'une quelconque des revendications 1 à 12, **caractérisé en ce**
**que** le support (6) présente une coulisse, qui reçoit le pivot (10) guidé par la plaque d'appui (8), et en ce que le pivot (10) peut être déplacé par coulissement dans la coulisse de telle manière que dans la position de verrouillage, un côté frontal du support (6) peut être déplacé par coulissement contre une surface du deuxième élément (4) et forme avec ladite surface un assemblage par complémentarité de forme pour un assemblage solidaire en rotation.
